# EUROPEAN PATENT SPECIFICATION

(11) **EP 3 650 663 B1**
(45) Date of publication and mention of the grant of the patent: **26.05.2021**
(21) Application number: 18205089.8
(22) Date of filing: 08.11.2018
(51) Int. Cl.: F01N 3/20, F01N 9/00, F01N 3/035, F01N 13/00

(54) **AN AFTERTREATMENT SYSTEM FOR A VEHICLE**
NACHBEHANDLUNGSSYSTEM FÜR EIN FAHRZEUG
SYSTÈME DE POST-TRAITEMENT POUR VÉHICULE

(43) Date of publication of application: 13.05.2020
(73) Proprietor: Volvo Car Corporation, 405 31 Göteborg (SE)
(72) Inventor: KAFVELSTRÖM, Maria, 423 53 GÖTEBORG (SE); HILLBOM, Ulf, 432 68 VEDDIGE (SE); ROHRSSEN, Karsten, 443 72 GRÅBO (SE); SEBESTYEN, Richard, 423 59 TORSLANDA (SE)
(74) Representative: Kransell & Wennborg KB

(56) References cited:
- EP-A1- 3 364 006
- DE-A1-102018 101 651
- US-A1- 2015 096 287
- US-A1- 2017 130 629
- US-A1- 2018 087 426

## Description

### Field of the Invention

The present invention relates to an aftertreatment system for a vehicle, and to a method for dosing of a liquid reductant for an aftertreatment system. The invention further relates to a vehicle comprising an aftertreatment system.

### Background of the Invention

The exhaust systems of modern vehicles most commonly comprise a reduction catalytic unit for reducing the levels of nitrogen oxides that are released into the surrounding air. Such a reduction catalytic unit may for instance comprise a so-called selective catalytic reduction device (SCR-device).

An SCR-device generally operates more efficiently at higher operating temperatures below an upper limit. A liquid reductant is often added SCR-devices for increasing the efficiency of the SCR-device. However, dosing at low temperatures limits the efficiency of the liquid reductant. Dosing at low temperatures leads to inability to evaporate the liquid reductant and thereby to an increased risk of deposit build up which may severely affect the efficiency of the SCR-device. Furthermore, dosing at too high temperatures may cause excessive oxidation of the liquid reductant with resulting low efficiency operation of the SCR-device.

DE102018101651 discloses a prior art aftertreatment device. US2017/0130629 discloses a prior art method to check the plausibility of a NOx-sensor. US2018/0087426 discloses a prior art exhaust gas aftertreatment system.

Accordingly, there is a need for improved aftertreatment systems for exhaust systems of vehicles which operates more efficiently.

### Summary

In view of above, it is an object of the present invention to provide an improved aftertreatment system with higher efficiency in dosing a liquid reductant. There is also provided an improved method and control unit for dosing of a liquid reductant for an aftertreatment system.

According to a first aspect of the invention, there is provided an aftertreatment system according to claim 1.

The present invention is based on the realization to include two injection units so that liquid reductant can be injected at two injection points in the aftertreatment system. With two injection units it is possible to more accurately adjust the dosing of liquid reductant in order to achieve a more efficient conversion of pollutes such as nitrogen oxide in the exhaust gas. This provides a more efficient aftertreatment system with regards to reducing emissions. Furthermore, the dosing of the liquid reductant is controlled according to the present driving condition which further improves the efficiency of the aftertreatment system.

Advantages of the inventive concept include reduced emissions such as nitrogen oxides, and reduced consumption of liquid reductant.

The catalytic units are generally configured to reduce the concentration of pollutes in the exhaust gas before it reaches the ambient outlet of the aftertreatment system. The catalytic units are preferably configured reduce the levels of nitrogen oxides released in the air.

The first catalytic unit may be of a type which has a slower gas flow than the second catalytic unit. The reaction time of the gas flow through the first catalytic unit may be slower due to the channel geometry in the first catalytic unit.

The first catalytic unit may comprise a filter which causes the gas flow through the first catalytic unit to be slower, i.e. with a longer constant, than the gas flow through the second catalytic unit. The slower gas response is due to the geometry of the filter.

One possible catalytic unit may be a selective catalytic reduction unit. Selective catalytic reduction units (SCRs) are *per se* known to the skilled person. Generally, an SCR is configured to convert nitrogen oxides into nitrogen and water and comprises a catalytic. The first catalytic unit comprising a filter may be a so-called selective catalytic reduction filter (SCR-F).

The catalyst is adapted to increase the conversion rate of the liquid reductant into the decomposed products. The decomposed products advantageously comprise ammonia (NH₃). Decomposition of the reductant into decomposed products is performed via thermolysis and hydrolysis. The catalyst preferably increases at least the hydrolysis of the reductant or at least one of its resulting products after evaporation and thermolysis.

The second injection unit is responsive to a second control signal to, at the same time as the first injection unit injects liquid reductant, inject liquid reductant to the exhaust gas flow at its corresponding injection point. In other words, the first injection unit injects liquid reductant at the same time as the first injection unit injects liquid reductant.

According to embodiments, the first injection unit and the second injection unit may be independently controllable to inject controlled doses of the liquid reductant. In other words, the aftertreatment may be adapted to a wide range of driving conditions by being able to individually control each of the injection units.

According to embodiments, for at least one vehicle driving condition, the second injection unit may be responsive to inject a dose of liquid reductant based on a detected remaining concentration of pollutes in the exhaust gas downstream of the first catalytic unit. In this way it is possible to adapt the dosing of liquid reductant for the second catalytic unit based on the performance of the first catalytic unit. Thereby, the efficiency of the aftertreatment is further improved and the emissions are further reduced.

According to embodiments, wherein for at least one vehicle driving condition, the first injection unit is responsive to the first control signal to inject sufficiently low doses of liquid reductant to allow for regeneration of the filter of the first catalytic unit, and, the second injection unit is responsive to the second control signal to inject a dose of liquid reductant based on a detected amount of pollutes in the exhaust gas downstream of the first catalytic unit.

Accordingly, passive regeneration of the filter becomes possible by reducing the dose of liquid reductant upstream of the first catalytic unit so that the soot in the filter can be oxidized. In order to still provide efficient emission control, the second injection unit provides the required amount of liquid reductant upstream of the second catalytic unit. This reduces the thermal stress on the first catalytic unit during regeneration of the filter and also reduces fuel consumptions since the regeneration will not require increased exhaust gas temperature as is often the case for e.g. soot regeneration in prior art systems.

According to embodiments wherein for vehicle driving conditions comprising an transient engine load the second injection unit may be responsive to inject a higher dose of liquid reductant than the dose injected by the first injection unit. Due to the slower gas response in the first catalytic unit comprising the filter, it is more beneficial to inject a higher dose downstream of the first catalytic unit than upstream of the first catalytic unit during rapid transient engine loads.

According to the invention, when an engine load rate of change exceeds a threshold rate of change, the first injection unit may be responsive to decrease the dosing of liquid reductant, and the second injection unit may be responsive to increase the dosing of liquid reductant. This is one possible advantageous dosing strategy.

According to embodiments, the dosing of liquid reductant from the first injection unit is maintained below a first dosing level and the dosing of liquid reductant from the second injection unit below a second dosing level as long as the engine load rate of change exceeds the threshold rate of change. This is part of one possible advantageous dosing strategy.

Furthermore, in some embodiments, wherein when the engine load rate of change is determined to be below the threshold rate of change, the first injection unit is responsive to inject a higher dose of liquid reductant than the second injection unit.

The liquid reductant may be a urea solution. In this case, the urea is heated to evaporate the water from the urea solution. Next, thermolysis breaks down decomposed products of the urea according to:

(NH₂)₂CO -> NH₃ + HNCO,

and subsequently, hydrolysis provides:

HNCO + H₂O -> NH₃ + CO₂.

The aftertreatment system is applicable to any type of exhaust system where a selective catalytic reduction unit is used. However, a preferred embodiment is for a vehicle with a diesel engine since it is often operative at lower temperatures than petrol engines.

According to a second aspect of the invention, there is provided a vehicle comprising the aftertreatment system according to any one of the embodiments of the first aspect.

This second aspect of the invention provides similar advantages as discussed above in relation to the previous aspect of the invention.

According to a third aspect of the invention, there is provided a method for dosing of a liquid reductant for an aftertreatment system of a vehicle, the method comprising: receiving a signal indicative of a present vehicle condition of the vehicle; and controlling dosing of the liquid reductant upstream of a first catalytic unit based on the present vehicle condition; and controlling dosing of the liquid reductant upstream of a second catalytic unit and downstream of the first catalytic unit based on the present vehicle condition.

Still according to the third aspect of the invention, the method further comprises determining an engine load rate of change; and when the engine load rate of change exceeds a threshold rate of change, decreasing the dosing of liquid reductant upstream of the first catalytic unit, increasing the dosing of liquid reductant upstream of the second catalytic unit and downstream of the first catalytic unit.

According to embodiments, controlling the dosing of liquid reductant upstream of the first catalytic unit to be sufficiently low to allow for regeneration of the filter of the first catalytic unit; determining a concentration of pollutes in the exhaust gas downstream of the first catalytic unit; controlling the dosing of the liquid reductant downstream of the first catalytic unit and upstream of the second catalytic unit based on the detected concentration of pollutes.

This third aspect of the invention provides similar advantages as discussed above in relation to the previous aspects of the invention.

According to a fourth aspect of the invention, there is provided a control unit according to claim 13.

This fourth aspect of the invention provides similar advantages as discussed above in relation to the previous aspects of the invention.

Further features of, and advantages with, the present invention will become apparent when studying the appended claims and the following description.

### Brief Description of the Drawings

These and other aspects of the present invention will now be described in more detail, with reference to the appended drawings showing example embodiments of the invention, wherein:
Fig. 1 conceptually illustrates a vehicle comprising aftertreatment system according to an exemplary embodiment;
Fig. 2 schematically illustrates an exhaust aftertreatment system according to an exemplary embodiment;
Fig. 3 schematically illustrates the engine load and the reductant dosing levels from the first injection unit and the second injection unit versus;
Fig. 4 is a flow-chart of method steps according to embodiments of the invention; and
Fig. 5 is a flow-chart of method steps according to embodiments of the invention.

### Detailed Description of Example Embodiments

In the present detailed description, various embodiments of the system and method according to the present invention are mainly described with reference to a car with a diesel engine. However, the present invention is equally well applicable to other vehicles such as trucks, boats, busses, etc. Thus, this invention may generally be embodied in many different forms and should not be construed as limited to the embodiments set forth herein; rather, these embodiments are provided for thoroughness and completeness, and fully convey the scope of the invention to the skilled person. Like reference characters refer to like elements throughout.

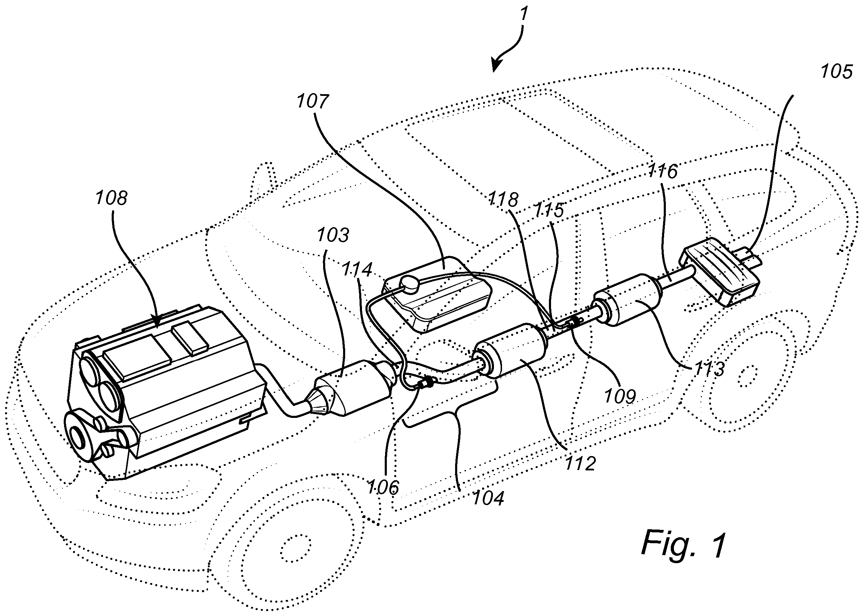

Fig. 1 conceptually illustrates a vehicle in the form of a car 1. The car comprises a combustion engine, such as a diesel engine 108 which produces exhaust gas. The car further comprises an exhaust aftertreatment system for reducing the emissions of e.g. nitrogen oxides from the vehicle, primarily emitted via the tail pipe 105.

The aftertreatment system comprises a first catalytic unit 112 arranged to receive exhaust gas from the combustion engine 108. The first catalytic unit 112 may be a selective catalytic reduction filter (SCR-F). Furthermore, a second catalytic unit 113 is arranged downstream of the first catalytic reduction unit 112. A pipe section 118 is arranged to lead exhaust gas from the first catalytic reduction unit 112 to the second catalytic reduction unit 113.

The first catalytic unit 112 may be of a type which has a slower gas flow than the second catalytic unit 113. The reaction time of the gas flow through the first catalytic unit may be slower due to the channel geometry in the first catalytic unit 112.

A first injection unit 106 is responsive to a first control signal to inject a liquid reductant to the exhaust gas flow upstream of the first catalytic unit 112 in the pipe section 104. A second injection unit 109 is responsive to a second control signal to inject the liquid reductant to the exhaust gas flow upstream of the second catalytic unit 113 and downstream of the first catalytic unit 112.

A control unit (not shown in fig. 1) may be configured to control the first injection unit 106 and the second injection unit 109 to inject controlled doses of liquid reductant based on a received signal indicative of a present vehicle driving condition.

Optionally, a NOx-trap device 103 (a so-called lean NOₓ trap, LNT device) is arranged between first injection unit 106 and the engine 108. The LNT-device 103 is used for collecting NOₓ for cold engine conditions. There is further a tank 107 serving as a reservoir of a liquid reductant provided to the injection units 106, 109. Embodiments of the after treatment system will now be described in more detail.

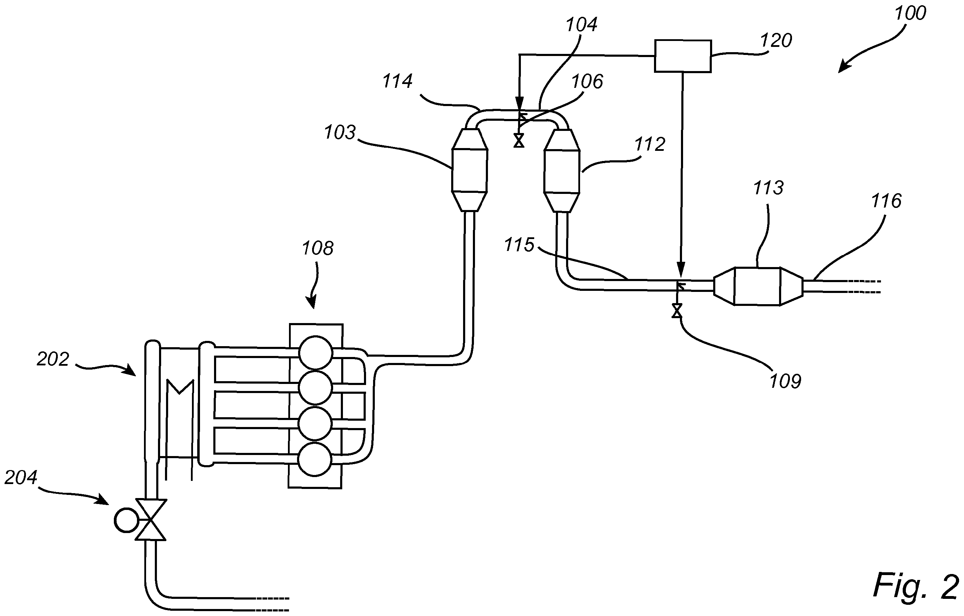

Fig. 2 schematically illustrates an exhaust aftertreatment system according to embodiments of the invention. An engine 108 produces exhaust gases which is received by the aftertreatment system 100.

Ambient air is introduced to the engine 108 via a throttle 204 and an inlet cooler 202 configured to cool the before it reaches the engine 108. From the combustion engine 108 the exhaust gas is guided to the aftertreatment system 100

As described above, the aftertreatment system 100 comprises a first injection unit 106 for providing a liquid reductant to a mixing section 104 upstream of a selective catalytic reduction filter 112. The mixing section 104 comprises a volume where evaporated reductant and the exhaust gas are mixed. Generally, heat from the exhaust gas provides energy for evaporating the liquid reductant in the mixing section 104.

Furthermore, a second injection unit 109 is arranged to inject the liquid reductant to the exhaust gas flow upstream of a selective catalytic reduction unit 113 and downstream of the selective catalytic reduction filter 112. The first injection unit 106 and the second injection unit 109 may be configured to inject liquid reductant at the same time.

Optionally, a NOx-trap device 103 (a so-called lean NOₓ trap, LNT device) is arranged between first injection unit 106 and the combustion engine 108.

A control unit 120 is configured to control the first injection unit 106 and the second injection unit 109 to inject controlled doses of liquid reductant based on a received signal indicative of a present vehicle driving condition. The control unit 120 is thus configured to provide a first control signal to which the first injection unit is responsive and a second control signal to which the second injection unit is responsive.

Furthermore, the control unit 120 is configured to determine the levels of nitrogen oxides (NOₓ) at three positions in the exhaust aftertreatment system 100. A first position 114 is upstream of the first injection unit 106, a second position 115 is downstream of the first catalytic reduction unit 112 and upstream of the second injection unit 109, and a third position 116 is downstream of the second catalytic reduction unit 113. Determining the NOₓ levels may be performed by different sensor setups (not shown) such as e.g. by lambda probes, or by suitable models. The NOₓ level at the third position 116 is preferably monitored by a sensor (not shown).

In one embodiment, the control unit 120 is configured to control the second injection unit 109 to inject a dose of liquid reductant based on a detected remaining concentration of pollutes in the exhaust gas downstream of the first catalytic unit 112. In other words, the NOₓ level may be determined at the second location 115, and based on the detected level of NOₓ is the dosing of liquid reductant injected by injection unit 109 determined. This may be advantageous for driving conditions such as: warming up and cooling down of the catalyst system, at load points there the maximum liquid reductant amount allowed for a typical standard injector are reached and more ammonia is required for reducing all possible NOx emissions or if the liquid reductant needed cannot be injected due to other hardware limitations.

Furthermore, during cold start driving conditions the temperature gradient is different between the first catalytic unit 112 (i.e. an SCR-F unit) and the second catalytic unit 113 (i.e. the SCR unit). For such driving conditions, the split of dosing between the first injection unit 106 and the second injection unit 109 may advantageously be performed with the main contribution of liquid reduction injected at the hot catalyst, i.e. at the first catalytic unit 112.

Additionally, the control unit 120 may be configured to control the first injection unit 106 to inject sufficiently low doses of liquid reductant to allow for regeneration of the filter of the first catalytic unit 112. At the same time the NOₓ level may be determined at the second location 115, and based on the detected level of NOₓ is the dosing of liquid reductant injected by the second injection unit 109 determined.

In one example embodiment, the liquid reductant comprises a urea solution, urea solution as liquid reductants are known *per se.* However, the scope of the invention is not limited to the liquid reductant comprising urea.

The control unit 120 is configured to control the first injection unit 106 and the second injection unit 109 to inject controlled doses of liquid reductant at their respective locations based on a received signal indicative of a present vehicle driving condition. Thus, the injection of liquid reductant may relate to injection strategies adapted for specific vehicle driving condition, one of which will be described next.

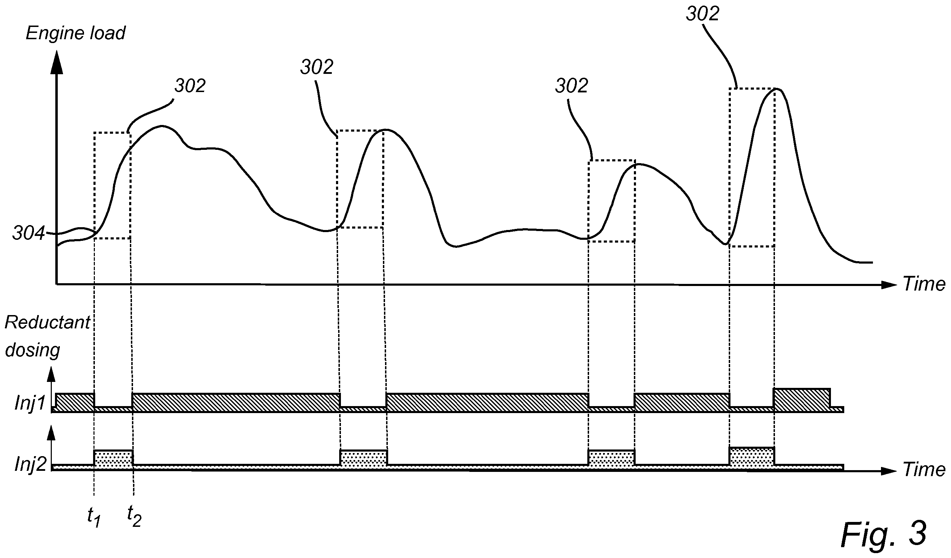

Fig. 3 schematically illustrates the engine load versus and the reductant dosing levels from the first injection unit 106, denoted inj1, in the graph and the second injection unit 109, and denoted Inj2, in the graph, versus, on the same scale.

Initially, the engine load is on a relatively low level. At t₁ the engine load increases relatively rapidly, i.e. with an engine load rate of change 304 that exceeds a threshold rate of change. At this point, the combustion engine produces exhaust gas at a high rate. Since the response of the first catalytic unit 112 comprising the filter is slower than that of the second catalytic unit 113, it is beneficial to re-route the main contribution of liquid reductant to come from the second injection unit 109 to be injected upstream of the faster second catalytic unit 113 which has the highest conversion and fastest catalytic response of the two catalytic units 112 and 113.

Accordingly, as is illustrated in the reductant dosing graph, the dosing from the first injection unit is reduced at t₁ and the dosing from the second injection unit is at the same time increased at t₁. The dosing of liquid reductant from the first injection unit is below the dosing level from the second injection unit.

The dosing of liquid reductant from the first injection unit is maintained below a first dosing level and the dosing of liquid reductant from the second injection unit is maintained at a level higher than the first dosing level but below a second dosing level for as long as the engine load rate of change exceeds the threshold rate of change. Here this is until t₂.

At t₂, the control unit controls, at the same time, the first injection unit to inject a higher dose of liquid reductant than the second injection unit.

The rapid increase in engine load is known as a transient engine load, and exemplary transient engine load behavior are indicated by dashed boxes 302. Thus, the control unit monitors the engine load behavior and controls the injection of liquid reductant from the first and the second injection units 106, 109 independent of each other.

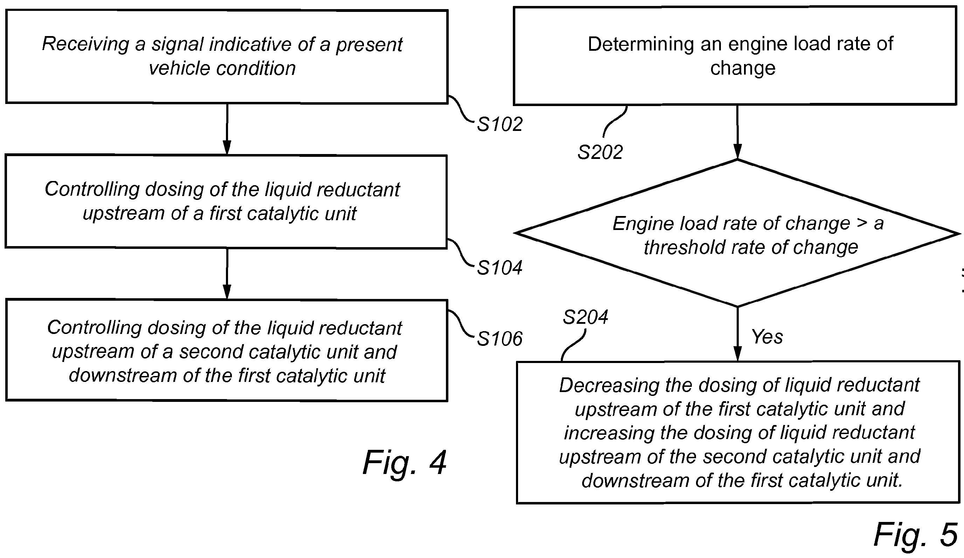

Fig. 4 is a flow chart of method step according to embodiments of the invention. In step S102 a signal indicative of a present vehicle condition of the vehicle is received. Subsequently in step S104, controlling dosing of the liquid reductant upstream of a first catalytic unit based on the present vehicle condition. Furthermore, in step S106 controlling dosing of the liquid reductant upstream of a second catalytic unit and downstream of the first catalytic unit based on the present vehicle condition.

Fig. 5 is a flow chart of method step according to embodiments of the invention. In step S202 determining an engine load rate of change. When the engine load rate of change exceeds a threshold rate of change, decreasing the dosing of liquid reductant upstream of the first catalytic unit, and increasing the dosing of liquid reductant upstream of the second catalytic unit and downstream of the first catalytic unit in step S204.

The vehicle control unit may include a microprocessor, microcontroller, programmable digital signal processor or another programmable device. The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. An aftertreatment system (100) for a vehicle (1) equipped with a first catalytic unit (112) arranged upstream of a second catalytic unit (113) operable to reduce pollutes in exhaust gas flowing through each catalytic unit, the aftertreatment system comprising:
- a first injection unit (106) responsive to a first control signal to inject liquid reductant to the exhaust gas flow upstream of the first catalytic unit;
- a second injection unit (109) responsive to a second control signal to, at the same time, inject the liquid reductant to the exhaust gas flow upstream of the second catalytic unit and downstream of the first catalytic unit, the aftertreatment system further comprising a control unit (120) configured to send the first and the second control signals to the first and second injection units such that the first and second control signals are a function of a present vehicle driving condition, and such that, when an engine load rate of change exceeds a threshold rate of change, the first injection unit decreases the dosing of liquid reductant, and the second injection unit increases the dosing of liquid reductant.

2. The aftertreatment system according to claim 1, wherein the first injection unit and the second injection unit are independently controllable to inject controlled doses of the liquid reductant.

3. The aftertreatment system according to claim 1 or 2, wherein for at least one vehicle driving condition, the second injection unit is responsive to inject a dose of liquid reductant based on a detected remaining concentration of pollutes in the exhaust gas downstream of the first catalytic unit.

4. The aftertreatment system according to any one of the preceding claims, wherein for at least one vehicle driving condition, the first injection unit is responsive to the first control signal to inject sufficiently low doses of liquid reductant to allow for regeneration of the filter of the first catalytic unit, and,
the second injection unit is responsive to the second control signal to inject a dose of liquid reductant based on a detected amount of pollutes in the exhaust gas downstream of the first catalytic unit.

5. The aftertreatment system according to any one of the preceding claims, wherein for vehicle driving conditions comprising an transient engine load the second injection unit is responsive to inject a higher dose of liquid reductant than the dose injected by the first injection unit.

6. The aftertreatment system according to claim 1, wherein the dosing of liquid reductant from the first injection unit is maintained below a first dosing level and the dosing of liquid reductant from the second injection unit below a second dosing level as long as the engine load rate of change exceeds the threshold rate of change.

7. The aftertreatment system according to any one of claim 6 and 7, wherein when the engine load rate of change is determined to be below the threshold rate of change, the first injection unit is responsive to inject a higher dose of liquid reductant than the second injection unit.

8. The aftertreatment system according to any one of the preceding claims, wherein the first catalytic unit is a selective catalytic reduction filter device.

9. The aftertreatment system according to any one of the preceding claims, wherein the first catalytic unit is a selective catalytic reduction device.

10. A vehicle comprising the aftertreatment system according to any one of claims 1 to 9.

11. A method for dosing of a liquid reductant for an aftertreatment system of a vehicle, the method comprising:
- receiving (S102) a signal indicative of a present vehicle condition of the vehicle;
- determining (S202) an engine load rate of change,
- controlling (S104) dosing of the liquid reductant upstream of a first catalytic unit based on the present vehicle condition; and
- controlling (S106) dosing of the liquid reductant upstream of a second catalytic unit and downstream of the first catalytic unit based on the present vehicle condition, wherein
when the engine load rate of change exceeds a threshold rate of change, decreasing (S204) the dosing of liquid reductant upstream of the first catalytic unit, and increasing the dosing of liquid reductant upstream of the second catalytic unit and downstream of the first catalytic unit.

12. The method according to claim 11, comprising:
- controlling the dosing of liquid reductant upstream of the first catalytic unit to be sufficiently low to allow for regeneration of the filter of the first catalytic unit;
- determining a concentration of pollutes in the exhaust gas downstream of the first catalytic unit;
- controlling the dosing of the liquid reductant downstream of the first catalytic unit and upstream of the second catalytic unit based on the detected concentration of pollutes.

13. A control unit (120) for dosing a liquid reductant for an aftertreatment system of a vehicle according to claim 1, the control unit being configured to:
- receive a signal indicative of a present vehicle condition of the vehicle;
- receive a signal indicative of the engine load rate of change;
- control dosing of the liquid reductant upstream of a first catalytic unit based on the present vehicle condition; and
- control dosing of the liquid reductant upstream of a second catalytic unit and downstream of the first catalytic unit based on the present vehicle condition, wherein the control unit is further configured to,
when the engine load rate of change exceeds a threshold rate of change, control the first injection unit to decrease the dosing of liquid reductant, and control the second injection unit to increase the dosing of liquid reductant.

## Patentansprüche

1. Nachbehandlungssystem (100) für ein Fahrzeug (1), das mit einer ersten katalytischen Einheit (112) ausgestattet ist, die stromaufwärts einer zweiten katalytischen Einheit (113) angeordnet ist, die dazu betreibbar ist, Verunreinigungen im durch jede katalytische Einheit strömenden Abgas zu verringern, wobei das Nachbehandlungssystem umfasst:
- eine erste Einspritzeinheit (106), die auf ein erstes Steuersignal reagiert, um flüssiges Reduktionsmittel in den Abgasstrom stromaufwärts der ersten katalytischen Einheit einzuspritzen;
- eine zweite Einspritzeinheit (109), die auf ein zweites Steuersignal reagiert, um gleichzeitig das flüssige Reduktionsmittel in den Abgasstrom stromaufwärts der zweiten katalytischen Einheit und stromabwärts der ersten katalytischen Einheit einzuspritzen, wobei das Nachbehandlungssystem ferner eine Steuereinheit (120) umfasst, die dazu ausgelegt ist, das erste und das zweite Steuersignal an die erste und die zweite Einspritzeinheit zu senden, sodass das erste und das zweite Steuersignal eine Funktion eines aktuellen Fahrzeugfahrzustands sind, und sodass,
wenn eine Änderungsrate der Motorlast eine Schwellenänderungsrate überschreitet, die erste Einspritzeinheit die Dosierung von flüssigem Reduktionsmittel verringert und die zweite Einspritzeinheit die Dosierung von flüssigem Reduktionsmittel erhöht.

2. Nachbehandlungssystem gemäß Anspruch 1, wobei die erste Einspritzeinheit und die zweite Einspritzeinheit unabhängig voneinander steuerbar sind, um gesteuerte Dosen des flüssigen Reduktionsmittels einzuspritzen.

3. Nachbehandlungssystem gemäß Anspruch 1 oder 2, wobei für mindestens einen Fahrzustand des Fahrzeugs die zweite Einspritzeinheit reagiert, um eine Dosis flüssigen Reduktionsmittels basierend auf einer erkannten restlichen Konzentration von Schadstoffen im Abgas stromabwärts der ersten katalytischen Einheit einzuspritzen.

4. Nachbehandlungssystem gemäß einem der vorhergehenden Ansprüche, wobei für mindestens einen Fahrzustand des Fahrzeugs die erste Einspritzeinheit auf das erste Steuersignal reagiert, um ausreichend niedrige Dosen flüssigen Reduktionsmittels einzuspritzen, um eine Regeneration des Filters der ersten katalytischen Einheit zu ermöglichen, und,
die zweite Einspritzeinheit auf das zweite Steuersignal reagiert, um eine Dosis flüssigen Reduktionsmittels basierend auf einer erkannten Menge an Schadstoffen im Abgas stromabwärts der ersten katalytischen Einheit einzuspritzen.

5. Nachbehandlungssystem gemäß einem der vorhergehenden Ansprüche, wobei die zweite Einspritzeinheit bei Fahrzeugfahrbedingungen, die eine transiente Motorlast umfassen, reagiert, um eine höhere Dosis flüssigen Reduktionsmittels als die durch die erste Einspritzeinheit eingespritzte Dosis einzuspritzen.

6. Nachbehandlungssystem gemäß Anspruch 1, wobei die Dosierung flüssigen Reduktionsmittels aus der ersten Einspritzeinheit unterhalb eines ersten Dosierniveaus und die Dosierung flüssigen Reduktionsmittels aus der zweiten Einspritzeinheit unterhalb eines zweiten Dosierniveaus gehalten wird, solange die Änderungsrate der Motorlast die Schwellenänderungsrate überschreitet.

7. Nachbehandlungssystem gemäß einem der Ansprüche 6 und 7, wobei die erste Einspritzeinheit reagiert, um eine höhere Dosis flüssigen Reduktionsmittels als die zweite Einspritzeinheit einzuspritzen, wenn bestimmt wird, dass die Änderungsrate der Motorlast unterhalb der Schwellenänderungsrate liegt.

8. Nachbehandlungssystem gemäß einem der vorhergehenden Ansprüche, wobei die erste katalytische Einheit eine selektive katalytische Reduktionsfiltervorrichtung ist.

9. Nachbehandlungssystem gemäß einem der vorhergehenden Ansprüche, wobei die erste katalytische Einheit eine selektive katalytische Reduktionsvorrichtung ist.

10. Fahrzeug, umfassend das Nachbehandlungssystem gemäß einem der Ansprüche 1 bis 9.

11. Verfahren zum Dosieren eines flüssigen Reduktionsmittels für ein Nachbehandlungssystem eines Fahrzeugs, wobei das Verfahren umfasst:
- Empfangen (S102) eines Signals, das einen aktuellen Fahrzeugzustand des Fahrzeugs anzeigt;
- Bestimmen (S202) einer Änderungsrate der Motorlast,
- Steuern (S104) der Dosierung des flüssigen Reduktionsmittels stromaufwärts einer ersten katalytischen Einheit basierend auf dem aktuellen Fahrzeugzustand; und
- Steuern (S106) der Dosierung des flüssigen Reduktionsmittels stromaufwärts einer zweiten katalytischen Einheit und stromabwärts der ersten katalytischen Einheit basierend auf dem aktuellen Fahrzeugzustand, wobei
wenn die Änderungsrate der Motorlast eine Schwellenänderungsrate überschreitet, Verringern (S204) der Dosierung flüssigen Reduktionsmittels stromaufwärts der ersten katalytischen Einheit und Erhöhen der Dosierung flüssigen Reduktionsmittels stromaufwärts der zweiten katalytischen Einheit und stromabwärts der ersten katalytischen Einheit.

12. Verfahren gemäß Anspruch 11, umfassend:
- Steuern der Dosierung flüssigen Reduktionsmittels stromaufwärts der ersten katalytischen Einheit, sodass sie ausreichend niedrig ist, um eine Regeneration des Filters der ersten katalytischen Einheit zu ermöglichen;
- Bestimmen einer Konzentration von Schadstoffen im Abgas stromabwärts der ersten katalytischen Einheit;
- Steuern der Dosierung des flüssigen Reduktionsmittels stromabwärts der ersten katalytischen Einheit und stromaufwärts der zweiten katalytischen Einheit basierend auf der erkannten Konzentration von Schadstoffen.

13. Steuereinheit (120) zum Dosieren eines flüssigen Reduktionsmittels für ein Nachbehandlungssystem eines Fahrzeugs gemäß Anspruch 1, wobei die Steuereinheit dazu ausgelegt ist:
- ein Signal zu empfangen, das einen aktuellen Fahrzeugzustand des Fahrzeugs anzeigt;
- ein Signal zu empfangen, das die Änderungsrate der Motorlast anzeigt;
- die Dosierung des flüssigen Reduktionsmittels stromaufwärts einer ersten katalytischen Einheit basierend auf dem aktuellen Fahrzeugzustand zu steuern; und
- die Dosierung des flüssigen Reduktionsmittels stromaufwärts einer zweiten katalytischen Einheit und stromabwärts der ersten katalytischen Einheit basierend auf dem aktuellen Fahrzeugzustands zu steuern, wobei die Steuereinheit ferner dazu ausgelegt ist:
wenn eine Änderungsrate der Motorlast eine Schwellenänderungsrate überschreitet, die erste Einspritzeinheit zu steuern, die Dosierung flüssigen Reduktionsmittels zu verringern und die zweite Einspritzeinheit zu steuern, die Dosierung flüssigen Reduktionsmittels zu erhöhen.

## Revendications

1. Système de post-traitement (100) pour véhicule (1) équipé d'une première unité catalytique (112) disposée en amont d'une seconde unité catalytique (113) permettant de réduire les polluants dans les gaz d'échappement circulant à travers chaque unité catalytique, le système de post-traitement comprenant :
une première unité d'injection (106) réagissant à un premier signal de commande pour injecter un réducteur liquide dans le flux de gaz d'échappement en amont de la première unité catalytique ;
une seconde unité d'injection (109) réagissant à un second signal de commande pour, en même temps, injecter le réducteur liquide dans le flux de gaz d'échappement en amont de la seconde unité catalytique et en aval de la première unité catalytique, le système de post-traitement comprenant en outre une unité de commande (120) conçue pour envoyer les premier et second signaux de commande aux première et seconde unités d'injection de sorte que les premier et second signaux de commande soient une fonction d'une condition de conduite de véhicule actuelle, et de sorte que,
lorsqu'un taux de changement de charge de moteur dépasse un taux de changement seuil, la première unité d'injection diminue le dosage de réducteur liquide, et la seconde unité d'injection augmente le dosage de réducteur liquide.

2. Système de post-traitement selon la revendication 1, la première unité d'injection et la seconde unité d'injection pouvant être commandées indépendamment pour injecter des doses commandées du réducteur liquide.

3. Système de post-traitement selon la revendication 1 ou 2, pour au moins une condition de conduite de véhicule, la seconde unité d'injection étant sensible à l'injection d'une dose de réducteur liquide en fonction d'une concentration restante détectée de polluants dans le gaz d'échappement en aval de la première unité catalytique.

4. Système de post-traitement selon l'une quelconque des revendications précédentes, pour au moins une condition de conduite de véhicule, la première unité d'injection étant sensible au premier signal de commande pour injecter des doses suffisamment faibles de réducteur liquide pour permettre la régénération du filtre de la première unité catalytique, et,
la seconde unité d'injection étant sensible au second signal de commande pour injecter une dose de réducteur liquide en fonction d'une quantité détectée de polluants dans le gaz d'échappement en aval de la première unité catalytique.

5. Système de post-traitement selon l'une quelconque des revendications précédentes, pour des conditions de conduite du véhicule comprenant une charge de moteur transitoire, la seconde unité d'injection étant réactive pour injecter une dose de réducteur liquide supérieure à la dose injectée par la première unité d'injection.

6. Système de post-traitement selon la revendication 1, le dosage de réducteur liquide provenant de la première unité d'injection étant maintenu en dessous d'un premier niveau de dosage et le dosage de réducteur liquide provenant de la seconde unité d'injection en dessous d'un second niveau de dosage aussi longtemps que le taux de changement de charge de moteur dépasse le taux de changement seuil.

7. Système de post-traitement selon l'une quelconque des revendications 6 et 7, lorsque le taux de changement de charge de moteur est déterminé comme étant inférieur au taux de changement seuil, la première unité d'injection étant réactive pour injecter une dose plus élevée de réducteur liquide que la seconde unité d'injection.

8. Système de post-traitement selon l'une quelconque des revendications précédentes, la première unité catalytique étant un dispositif de filtration à réduction catalytique sélectif.

9. Système de post-traitement selon l'une quelconque des revendications précédentes, la première unité catalytique étant un dispositif de réduction catalytique sélective.

10. Véhicule comprenant le système de post-traitement selon l'une quelconque des revendications 1 à 9.

11. Procédé de dosage d'un réducteur liquide pour un système de post-traitement d'un véhicule, le procédé comprenant les étapes consistant à :
recevoir (S102) un signal indiquant une condition de véhicule actuelle du véhicule ;
déterminer (S202) un taux de changement de charge de moteur,
commander (S104) le dosage du réducteur liquide en amont d'une première unité catalytique en fonction de la condition de véhicule actuelle ; et
commander (S106) le dosage du réducteur liquide en amont d'une seconde unité catalytique et en aval de la première unité catalytique en fonction de la condition de véhicule actuelle,
lorsque le taux de changement de charge de moteur dépasse un taux de changement seuil, diminuer (S204) le dosage de réducteur liquide en amont de la première unité catalytique, et augmenter le dosage de réducteur liquide en amont de la seconde unité catalytique et en aval de la première unité catalytique.

12. Procédé selon la revendication 11, comprenant les étapes consistant à :
commander le dosage de réducteur liquide en amont de la première unité catalytique pour qu'il soit suffisamment faible pour permettre la régénération du filtre de la première unité catalytique ;
déterminer une concentration de polluants dans le gaz d'échappement en aval de la première unité catalytique ; commander le dosage du réducteur liquide en aval de la première unité catalytique et en amont de la seconde unité catalytique en fonction de la concentration détectée de polluants.

13. Unité de commande (120) pour doser un réducteur liquide pour un système de post-traitement d'un véhicule selon la revendication 1, l'unité de commande étant conçue pour :
recevoir un signal indiquant d'une condition de véhicule actuelle du véhicule ;
recevoir un signal indiquant le taux de changement de charge de moteur ;
commander le dosage du réducteur liquide en amont d'une première unité catalytique en fonction de la condition de véhicule actuelle ; et
commander le dosage du réducteur liquide en amont d'une seconde unité catalytique et en aval de la première unité catalytique en fonction de la condition de véhicule actuelle, l'unité de commande étant en outre conçue pour, lorsque le taux de changement de charge de moteur dépasse un taux de changement seuil, commander la première unité d'injection pour diminuer le dosage de réducteur liquide, et commander la seconde unité d'injection pour augmenter le dosage de réducteur liquide.
